# EUROPÄISCHE PATENTSCHRIFT

(11) **EP 0 640 990 B1**
(45) Veröffentlichungstag und Bekanntmachung des Hinweises auf die Patenterteilung: **15.11.1995**
(21) Anmeldenummer: 93113522.2
(22) Anmeldetag: 24.08.1993
(51) Int. Cl.: G21C 9/06

(54) **Vorrichtung zur passiven Inertisierung des Gasgemisches im Sicherheitsbehälter eines Kernkraftwerkes**
Device for passively rendering inert the gas mixture in the security containment of nuclear power plant
Dispositif pour l'inertisation passive du mélange gazeux dans l'enceinte de sécurité d'une centrale nucléaire

(43) Veröffentlichungstag der Anmeldung: 01.03.1995
(73) Patentinhaber: GESELLSCHAFT FÜR ANLAGEN- UND REAKTORSICHERHEIT ( GRS) mbH, D-50667 Köln (DE)
(72) Erfinder: Chakraborty, Amiya Kumar, Dr., D-50374 Erftstadt (DE)
(74) Vertreter: Hoffmann, Eckart, Dipl.-Ing.

(56) Entgegenhaltungen:
- EP-A- 0 303 144
- DE-A- 2 633 113
- DE-A- 4 036 126
- DE-A- 4 202 089
- NUCLEAR SAFETY Bd. 32, Nr. 3 , Juli 1991 , WASHINGTON US Seiten 380 - 387 XP292895 F. FINESCHI 'A strategy for dealing with risks due to Hydrogen explosions in the containments of Pressurized-Water Reactors of Russian design (WWERs)'
- NUCLEAR SAFETY Bd. 33, Nr. 3 , Juli 1992 , WASHINGTON US Seiten 398 - 414 XP372616 KUMAR ET AL. 'Hydrogen combustion mitigation concepts for nuclear reactor containment buildings'
- DATABASE WPI Week 8644, Derwent Publications Ltd., London, GB; AN 86-289503 [44] & JP-A-61 213 795 (TOSHIBA) 22. September 1986

## Beschreibung

Die Erfindung betrifft eine Vorrichtung zur Verhinderung der Entstehung eines zündfähigen Gemisches aus Wasserstoff und Sauerstoff im Sicherheitsbehälter eines Kernkraftwerkes im Falle eines mit der Freisetzung von Wasserstoff unter gleichzeitiger Temperaturerhöhung verbundenen Störfalles.

Verschiedenartige chemische Prozesse führen während der Entwicklung eines schweren Störfalles in einem Kernkraftwerk zur Entstehung von Wasserstoff. Hierdurch können sich brennbare Gasgemische im Sicherheitsbehälter bilden. Eine längerfristige Freisetzung und Anreicherung von Wasserstoff kann zu detonationsfähigen Gemischen führen. Dies bedeutet eine erhöhte Gefährdung der Integrität des Sicherheitsbehälters, der letzten Barriere für die Rückhaltung von Spaltprodukten. (Der Begriff "Sicherheitsbehälter" steht hier als Oberbegriff für alle Räumlichkeiten, in denen das geschilderte Problem auftreten kann und gelöst werden muß.)

Zur Vermeidung der von einem solchen zündfähigen Gasgemisch ausgehenden Gefahr sind Maßnahmen bekannt, die auf eine Beseitigung des Wasserstoffs in den Räumlichkeiten des Sicherheitsbehälters abzielen (siehe F. Fineschi in "A Strategy for Dealing with Risks Due to Hydrogen Explosions in the Containments of Pressurized-Water Reactors of Russian Design (WWERs)", NUCLEAR SAFETY, Band. 32, Nr. 3, Juli-September 1991 S 380-387, und R.K. Kumar et al. in "Hydrogen Combustion Mitigation Concepts for Nuclear Reactor Containment Buildings", NUCLEAR SAFETY, Band. 33, Nr. 3, July-September 1992 S 398-414). Diese Maßnahmen umfassen den Einsatz von Zündern sowie die katalytische Rekombination des Wasserstoff mit dem im Sicherheitsbehälter vorhandenen Sauerstoff zu Wasser (z.B. EP-A-0 303 144). Insbesondere der Einsatz katalytischer Rekombinatoren, die inzwischen in verschiedenen Ausführungen bekannt geworden sind (EP-A-0 416 143, DE-A-36 04 416, EP-A-0 303 144, DE-A-40 03 833), erscheint vielversprechend, wenngleich aus den nachfolgenden Gründen auch nicht ausreichend, die Gefahr einer Deflagration oder gar Detonation völlig zu bannen.

Abhängig vom Dampfgehalt der Atmosphäre innerhalb der Räumlichkeiten des Sicherheitsbehälters kann die Deflagrationsgrenze bereits bei einer lokalen Wasserstoffkonzentration oberhalb von 4% erreicht werden. Es ist bekannt, daß Dampf inertisierend wirkt, das heißt, daß bei höherem Dampfgehalt die Deflagrationsgrenze erst bei höheren Wasserstoffkonzentrationen erreicht wird. Aus Modelluntersuchungen weiß man, daß mit dem Beginn eines Kernschmelzunfalls zunächst Dampf freigesetzt wird, während der Wasserstoff erst mit einer gewissen Verzögerung entsteht. Die Zusammensetzung des Gasgemisches in den verschiedenen Räumlichkeiten des Sicherheitsbehälters kann jedoch sehr unterschiedlich sein und sich während des weiteren Verlaufs nach Beginn des Störfalls ständig verändern.

Die Reaktionsgeschwindigkeit der katalytischen Rekombinatoren (Katalysatoren) nimmt exponentiell mit der Temperatur zu. Die Katalysatoren heizen sich bis zum Erreichen eines Gleichgewichts zwischen der entstehenden Wärme und der abgeführten Wärme auf. Erst bei Erreichen höherer Katalysatortemperaturen beschleunigt sich der Abbau des Wasserstoffs und führt die von der Temperaturerhöhung herrührende Konvektion zu einer Durchmischung der umgebenden Atmosphäre.

Wenn die Zufuhr des Wasserstoffs innerhalb eines Raumes schneller als seine Vernichtung durch die katalytische Rekombination verläuft, ergibt sich eine Aufkonzentration innerhalb des Gasgemisches. Der zunächst, nicht notwendigerweise in allen Räumen des Sicherheitsbehälters in gleichem Ausmaß vorhandene Dampfgehalt wird im weiteren Verlauf durch Kondensation an den kühlen Wänden vermindert, womit auch seine inertisierende Wirkung abnimmt.

Die sogenannte Detonations-Zellenweite bildet ein Maß für die Fortschreitung einer Detonation und gleichzeitig für die Empfindlichkeit eines Gasgemisches zur Detonation. Je kleiner die Zellenweite, desto größer ist die Detonationsfähigkeit des Gasgemisches. Es ist bekannt, daß die Verdünnung des Wasserstoff enthaltenden Gasgemisches durch Dampf und mehr noch durch CO₂ eine Zunahme der Detonations-Zellenweite bewirkt. Dies gilt sowohl für niedrige als auch für höhere Temperaturen. Für ein Gasgemisch bei 100°C mit stöchiometrischer Zusammensetzung vergrößert sich durch den Zusatz von 10 bzw. 20 Vol.% CO₂ die Detonations-Zellenweite beispielsweise um das 5- bzw. 34-fache (4- bzw. 6-fache im Fall von Dampf) verglichen mit derjenigen ohne den Zusatz von CO₂ (Dampf). Über die Wirkung einer gleichzeitigen Verdünnung eines Gasgemisches sowohl mit Dampf als auch CO₂ liegen bisher keine Erkenntnisse vor. Es darf jedoch davon ausgegangen werden, daß der Einfluß mindestens additiv ist.

Durch Temperatur- sowie Druckerhöhung wird die DetonationsZellenweite eines Gasgemisches gleicher Zusammensetzung verkleinert. Während der Unfallsituation wird in den Räumlichkeiten des Sicherheitsbehälters eine Temperatur um 100°C herrschen. Demgegenüber kann sich in unmittelbarer Nähe einer kalten Betonwand eine deutlich niedrigere Temperatur des Gasgemisches ergeben. Diese wird eine Zunahme der DetonationsZellenweite verursachen. Zugleich wird jedoch durch eine Abnahme des Dampfgehalts auf Grund von Kondensation eine Neigung zur Abnahme der Detonations-Zellenweite des Gasgemisches vorhanden sein.

Es sind Überlegungen angestellt worden, die inertisierende Wirkung von CO₂ zur Vermeidung einer Detonationsgefahr während einer Unfallsituation in einem Sicherheitsbehälter einzusetzen. Dabei hat man zwischen einer sogenannten Vorinertisierung und einer sogenannten Nachinertisierung unterschieden (vergleiche die beiden oben genannten Aufsätze in NUCLEAR SAFETY). Bei der Vorinertisierung werden die Räume des Sicherheitsbehälters des Kernkraftwerks von Anfang an mit Stickstoff (N₂) gefüllt, so daß bei Auftreten eines Unfalls kein mit dem dann entstehenden Wasserstoff ein zündfähiges Gemisch bildender Sauerstoff zur Verfügung stünde. Eine solche Vorinertisierung ist doch mit derartigen praktischen Problemen behaftet, daß ihr keine wirkliche Bedeutung beizumessen ist. Erwähnt sei nur die Problematik der Begehung des eine reine Stickstoffatmosphäre enthaltenden Sicherheitsbehälters während des normalen Betriebs.

Unter der Nachinertisierung versteht man eine erst bei Auftreten eines Unfalls ausgelöste Einspeisung von flüssigem CO₂ in den Sicherheitsbehälter. Diese Nachinertisierung stellt eine aktive Sicherheitsmaßnahme dar, die schon deshalb wenig realistisch ist. Aktiv bedeutet, daß eine Vorrichtung vorhanden sein muß, die die Tatsache des Unfalls erkennt und die CO₂ Einleitung aktiviert. Jede aktive Maßnahme leidet daran, daß man sich nie hundertprozentig darauf verlassen kann, daß sie im Ernstfall auch wirklich funktionieren wird. Darüberhinaus sind mit der Einspeisung des kalten CO₂ von -78°C erhebliche Probleme verbunden. Diese Kaltgas-Einspeisung wird zum einen eine erheblich verstärkte Kondensation des im Sicherheitsbehälter vorhandenen Dampfes verursachen, und dessen inertisierende Wirkung aufheben. Darüberhinaus ist diese Einspeisung notwendigerweise mit einer späteren Druckerhöhung verbunden, die, wie oben ausgeführt, die Detonations-Zellenweite herabsetzt. Nicht zuletzt ist sehr unsicher, wie sich die mit der Kaltgas-Einspeisung verbundenen niedrigen Temperaturen auf die sicherheitstechnisch relevanten Komponenten im Sicherheitsbehälter auswirken.

Stellen also die katalysatorischen Rekombinatoren, bei denen es sich im übrigen um passive Sicherheitseinrichtungen handelt, durchaus Einrichtungen dar, die durch Wasserstoffabbau wesentlich zur Entschärfung der geschilderten Unfallsituation beitragen können, ohne aber die Gefahr möglicherweise vollständig zu bannen, so erscheinen die bisher erwogenen Möglichkeiten der Vorinertisierung und der Nachinertisierung als nicht praktikabel.

Aufgabe der vorliegenden Erfindung ist es, eine Vorrichtung der eingangs angegebenen Art zu schaffen, die im Störungsfall eine Inertisierung der Atmosphäre im Sicherheitsbehälter bewirkt, ohne mit den Problemen der geschilderten Vor- und Nachinertisierung behaftet zu sein.

Diese Aufgabe wird erfindungsgemäß durch eine Vorrichtung gemäß Patentanspruch 1 gelöst.

Vorteilhafte Weiterbildungen der Erfindung sind in den Unteransprüchen gekennzeichnet.

Mit der Erfindung wird die Möglichkeit einer passiven, ohne jede Hilfsenergie auskommenden Inertisierung geschaffen. Für diese passive Inertisierung werden chemische Substanzen als Inertisierungsstoffe eingesetzt, die, ausgelöst durch den bei einem Unfall einsetzenden Temperaturanstieg, ein inertisierendes Gas oder Gasgemisch, beispielsweise CO₂ und/oder Wasserdampf, in den Sicherheitsbehälter abgeben. Dabei kann es sich um zwei verschiedenartige chemische Substanzen handeln, die man bei Erreichen einer bestimmten Temperatur (Reaktionstemperatur) miteinander reagieren läßt, oder um Stoffe, die sich bei Erreichung einer bestimmten Reaktionstemperatur unter Abgabe des inertisierenden Gases oder Gasgemisches zersetzen. Der erstere der vorgenannten Fälle schließt Substanzen ein, die, wenn sie miteinander in Berührung kommen, auch bereits bei Temperaturen miteinander reagieren, die sehr viel niedriger als die als Reaktionstemperatur im vorliegenden Fall in Betracht kommenden Temperaturen sind. Solche Substanzen dürfen natürlich erst bei Auftreten des Störfalles miteinander in Kontakt kommen. Auch dies läßt sich jedoch auf passive Weise etwa mit Hilfe einer die Substanzen voneinander trennenden Membran bewerkstelligen, die sich bei Erreichen der gewünschten Reaktionstemperatur verflüssigt oder in anderer Weise den direkten Kontakt von den miteinander zu reagierenden chemischen Substanzen freigibt.

Als Beispiele für Stoffe, die bei Erreichen einer bestimmten Temperatur miteinander zur Reaktion gebracht werden können, um ein inertisierendes Gas oder Gasgemisch (hier CO₂ und Wasserdampf) freizusetzen, seien Calciumbikarbonat in Verbindung mit Salzsäure und Kaliumpermanganat in Verbindung mit einem Gemisch aus Oxalsäure und etwas Schwefelsäure genannt.

Als Inertisierungsstoffe, die sich bei Erreichen bestimmter Temperaturen unter Freigabe von CO₂ und/oder Wasserdampf zersetzen und für die Zwecke der vorliegenden Erfindung verwendet werden können, eignen sich beispielsweise die folgenden Verbindungen:

Zinkspat (ZnCO₃) existiert in Form von weißem Pulver mit einer Dichte von etwa 4 g/cm³. Die Verbindung weist eine Zersetzungstemperatur von 300°C auf, bei der das gasförmige CO₂ freigesetzt wird. Der Anteil des CO₂ am Molekulargewicht dieser Verbindung beträgt 49%. Nach der Reaktion bleibt Zinkoxid (ZnO) als Reaktionsprodukt zurück, das einen hohen Schmelzpunkt von 1260°C aufweist.

Eisen(II)-Oxalat (FeC₂O₄·2H₂P) existiert in Form von gelblichen Kristallen mit einer Dichte von etwa 2 g/cm³. Bei einer Temperatur von 190°C zersetzt sich diese Verbindung zu FeO+CO₂+CO+2H₂O. An dem Molekulargewicht dieser Verbindung beträgt der Anteil des CO₂ 25% und des Kristallwassers 20%. Das bedeutet, daß mit 100 g dieser Verbindung bei 190°C 25 g CO₂ und 20 g Dampf für die Inertisierung freigesetzt werden können. Das nach der Zersetzung zurückbleibende FeO reagiert mit dem vorhandenen Sauerstoff aus der Luft und geht in höhere Oxidform über. Dies hat den zusätzlichen Vorteil einer Partialdrucksenkung des Sauerstoffs innerhalb des Sicherheitsbehälters, was seinerseits zur Inertisierung beiträgt.

Eisen(II)-Karbonat (FeCO₃), das in der Natur als Spateisenstein vorkommt, zerfällt bei etwa 300°C in Eisenoxid (FeO) und Kohlendioxid (Co₂). Der Anteil des CO₂ an dem Molekulargewicht der Verbindung beträgt 38 %. Auch in diesem Fall reagiert das bei der Zersetzung anfallende Eisenoxid mit dem vorhandenen Sauerstoff aus der Atmosphäre des Sicherheitsbehälters.

Borax (Na₂B₄O₇·10H₂O) kommt in der Natur unter dem Namen Tinkal vor. Borax bildet in reinem Zustand große, farblose, durchsichtige, an trockener Luft oberflächlich verwitternde Kristalle, welche beim Erhitzen auf 350 bis 400°C in wasserfreies Na₂B₄O₇ mit einem Schmelzpunkt von 878°C übergehen. Der Anteil des Kristallwassers an dem Molekulargewicht beträgt 47%.

Kaliumalaun (KAl(SO₄)₂·12H₂O) kommt in der Natur vor. Von den zwölf Wassermolekülen sind sechs in lockerer Bindung mit dem Kalium, die anderen sechs in fester Bindung mit dem Aluminium verbunden. Dies bedeutet, daß bei Erreichen einer Temperatur von 100°C zunächst die Hälfte und später bei höheren Temperaturen der Rest des Kristallwassers in Form von Dampf freigesetzt wird. Der Anteil des Kristallwassers am Molekulargewicht beträgt 45,5%.

Die Verbindung [Mg(MgCO₃)₄](OH)₂·5H₂O existiert als weißes Pulver und ist in der Industrie als "Magnesia alba" oder "Magnesia karbonika" bekannt. Der Anteil des CO₂ und des H₂O am Molekulargewicht dieser Verbindung beträgt 51% bzw. 23%.

Der erfindungsgemäße Einsatz von Inertisierungselementen bietet unter anderem die folgenden wesentlichen Vorteile:
- die Inertisierung ist vollkommen passiv, d.h., es ist keine Hilfsenergiequelle erforderlich, die in einem Störungsfall möglicherweise ausfallen könnte,
- die Inertisierung findet erst statt, wenn sie benötigt wird, d.h., während des normalen Reaktorbetriebs ist die Begehbarkeit der erfindungsgemäß geschützten Räume in keiner Weise eingeschränkt,
- durch Wahl der Menge und Art der Inertisierungsstoffe mit ihrer jeweiligen Reaktionstemperatur läßt sich abhängig von der zu erwartenden Menge freigesetzten Wasserstoffs eine Inertisierung gerade in dem Ausmaß erzielen, der zur Vermeidung einer Deflagration oder Detonation erforderlich ist,
- die dem Erfordernis entsprechend gesteuerte Inertisierung bewirkt keinen übermäßigen Druckanstieg,
- nach anfänglicher Inertisierung können gleichzeitig vorhandene katalytische Rekombinatoren bei höheren Temperaturen und damit effektiver arbeiten, ohne daß diese hohe Temperatur eine Gefährdung darstellen würde.

Die erfindungsgemäße passive Inertisierung wird in der Regel zusätzlich zur Verwendung katalytischer Rekombinatoren eingesetzt werden. Gemäß einer bevorzugten Ausführungsform können durch Ausnutzung einer gegenseitigen Beeinflussung beider Maßnahmen zusätzliche Vorteile erzielt werden.

Wie schon eingangs erwähnt, heizen sich die als katalytische Rekombinatoren eingesetzten Katalysatoranordnungen aufgrund der exothermen Reaktion auf. Werden die erfindungsgemäß eingesetzten chemischen Substanzen in die Nähe einer Katalysatoranordnung gebracht, dann kann die von letzterer entwickelte Wärme zur Einleitung der gewünschten Reaktion bzw. Zersetzung ausgenutzt werden, das heißt man ist bei der Auswahl der chemischen Substanzen nicht auf solche beschränkt, deren Reaktionstemperatur für die Reaktion oder Zersetzung im Bereich von 100°C liegt. Man kann insbesondere auch verschiedene Substanzen mit unterschiedlichen Reaktionstemperaturen einsetzen, um so eine entsprechend dem Temperaturanstieg zeitlich gestaffelte passive Inertisierungswirkung zu erreichen. Die Anordnung der Substanzen in der Nähe der Katalysatoren hat den weiteren Vorteil einer raschen Vermischung des freigesetzten CO₂ und/oder Dampfes mit der umgebenden Atmosphäre, und zwar aufgrund der von den erwärmten Katalysatoranordnung bewirkten Konvektionsströme.

Die an den Katalysatoren entstehende Wärme kann also mit großem Vorteil für die passive Inertisierung ausgenutzt werden. Andererseits verhindert der damit verbundene Wärmeentzug einen zu hohen Temperaturanstieg der Katalysatoren, der anderenfalls zu einer Zündung des Gasgemisches führen könnte.

Ausführungsbeispiele der Erfindung werden nachfolgend anhand der beiliegenden schematischen Zeichnungen näher erläutert. Es zeigen:
- Fig. 1a: eine Vorderansicht einer zusätzlich mit erfindungsgemäßen Inertisierungselementen bestückten Katalysatorplatte,
- Fig. 1b: eine Seitenansicht auf die Katalysatorplatte in Richtung des Pfeiles B in Fig. 1a,
- Fig. 1c: eine Teil-Seitenansicht auf die Katalysatorplatte in Richtung des Pfeiles C in Fig. 1a,
- Fig. 2: eine vergrößerte Detailschnittdarstellung des in Fig. 1c mit II markierten Teils der Katalysatorplatte,
- Fig. 3: eine der Fig. 2 entsprechende Ansicht zur Erläuterung einer abgewandelten Ausführungsform,
- Fig. 4: eine andere Ausführungsform einer Katalysatoranordnung mit Inertisierungselement,
- Fig. 5 und 6: Diagramme zur Erläuterung der Inertisierungswirkung verschiedener im Rahmen der Erfindung einsetzbarer Substanzen, und
- Fig. 7: eine rein schematische Darstellung einer weiteren Ausführungsform der Erfindung.

Die Erfindung wird nachfolgend anhand von Ausführungsbeispielen beschrieben, bei denen die Inertisierungselemente mit einer Katalysatoranordnung zu einer Schutzeinheit kombiniert sind. Es sei an dieser Stelle noch einmal hervorgehoben, daß diese Verbindung von Katalysatoranordnung und Inertisierungselementen zusätzliche synergistische Wirkungen hervorruft, daß aber ungeachtet der Tatsache, daß im folgenden nur darauf bezogene Ausführungsbeispiele beschrieben werden, die erfindungsgemäßen Inertisierungselemente durchaus auch unabhängig von einer Katalysatoranordnung eingesetzt werden können.

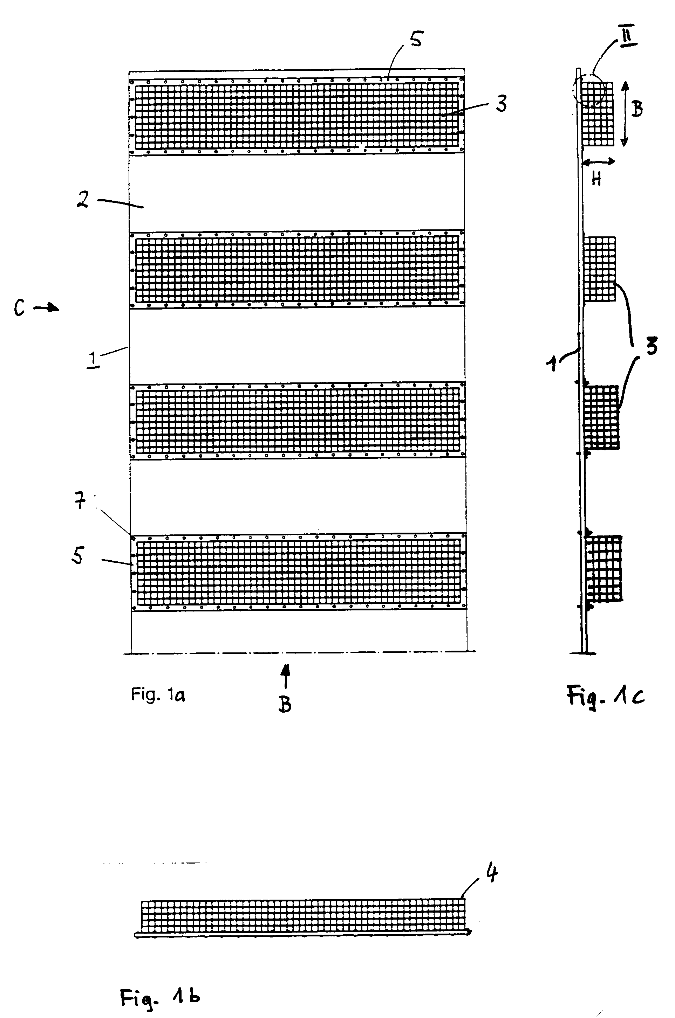

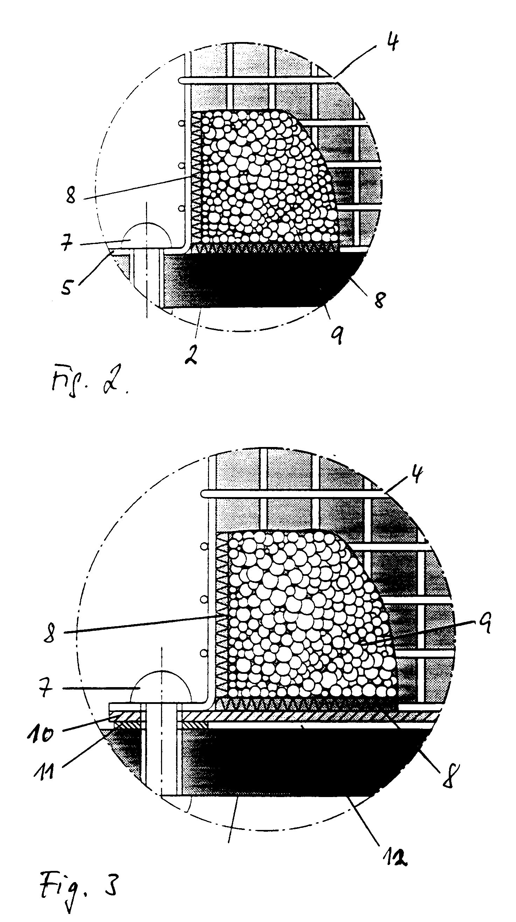

Die Figuren 1 und 2 zeigen ein erstes Ausführungsbeispiel der Erfindung in Form einer Schutzeinheit 1, die sich aus einer Katalysatorplatte 2 und an dieser angebrachten Inertisierungselementen 3 zusammensetzt. Bei der Katalysatorplatte 2 handelt es sich beispielsweise um eine Trägerplatte aus rostfreiem Stahl, die vorzugsweise beidseitig mit einem Katalysatormaterial beschichtet ist, wie es beispielsweise in der DE-A-37 25 290 beschrieben wird. Stattdessen könnte die Katalysatorplatte 2 auch ganz aus dem Katalysatormaterial bestehen. Die Inertisierungselemente 3 umfassen jeweils einen kastenartigen Behälter 4 aus einem gitterartigen Material aus rostfreiem Stahldraht, der im Bereich seines Bodens mit einem seitlich abstehenden Flansch 5 zur Befestigung an der Katalysatorplatte 2 versehen ist. Der Kasten ist, wie in der teilweise aufgebrochenen Schnittdarstellung von Fig. 2 erkennbar, mit dem Inertisierungsstoff 9 beispielsweise in Form von Pulver, Granulat, Kristalliten oder dergleichen aufgefüllt. Der Behälter 4 des Inertisierungselements 3 kann, wie in Fig. 2 angedeutet, mit Hilfe von Schrauben 7 und Muttern oder auf andere geeignete Weise mit der Katalysatorplatte 2 verbunden werden.

Wie sich aus Fig. 2 ergibt, ist beim dargestellten Ausführungsbeispiel der Boden des Behälters 4 offen, es befindet sich aber eine etwa 1 mm dicke Filterschicht 8 zwischen der Oberfläche der Katalysatorplatte 2 und dem Inertisierungsstoff. Eine gleiche Filterschicht ist zwischen den Wänden des Behälters 4 einerseits und dem darin befindlichen Inertisierungsstoff vorgesehen. Bei der Filterschicht handelt es sich um einen sogenannten HEPA-Filter (High Efficiency Particulate Air). Dies sind Filter aus Glaswolle und einem Bindemittel, die sehr temperaturbeständig sind (bis etwa 850°C). Diese Filter sind für Wasserstoff, Sauerstoff, Wasserdampf und CO₂ durchlässig, halten aber Aerosole und Fetteilchen von dem Inertisierungsstoff fern und verhindern außerdem einen möglicherweise zu unerwünschten Reaktionen führenden direkten Kontakt zwischen der Katalysatorplatte und dem Inertisierungsstoff. Wenn der Inertisierungsstoff vor und/oder nach seiner Zersetzung partikelförmig ist, dann verhindern die Filter zugleich ein Herausfallen durch die gitterartigen Wände des Behälters 4.

Eines oder mehrere dieser Inertisierungselemente (4 sind in Fig. 1 beispielhaft gezeigt) werden an der Katalysatorplatte 2 derart befestigt, daß noch freie Katalysatoroberfläche für die katalytische Reaktion überbleibt. Der Anteil der freien Oberfläche sowie Anzahl und Größe der Inertisierungselemente werden abhängig von dem Einsatzort der Schutzeinheit bestimmt, genauer, abhängig von der erwarteten Wasserstoffzufuhr und dem erwarteten nötigen Inertisierungsgrad am jeweiligen Einsatzort. Durch Vergrößerung der Höhe H der Inertisierungselemente bei entsprechender Verkleinerung ihrer Breite B kann der Anteil der freien Katalysatoroberfläche vergrößert werden. Bei dieser Bemessung ist zu berücksichtigen, daß bei ausreichender Porosität des Inertisierungsstoffes die von den Inertisierungselementen bedeckte Oberfläche des Katalysatorplatte nicht ganz für die katalytische Reaktion verloren geht, da auch durch die Inertisierungselemente hindurch Wasserstoff und Sauerstoff an diese Oberfläche gelangen können. Dies gilt in noch stärkerem Maß für den Zustand nach der Zersetzung des Inertisierungsstoffes, da die Porosität des nach der Zersetzung übrigbleibenden Reaktionsprodukts bei den meisten in Frage kommenden Inertisierungsstoffen sehr viel größer ist als vor der Zersetzung.

Sobald Wasserstoff in die Atmosphäre des Raums freigesetzt wird, der eine oder mehrere derartige Schutzeinheiten 1 enthält, wird die katalytische Umwandlung des Wasserstoffs mit dem Sauerstoff zu Wasser einsetzen und sich die Katalysatorplatte 2 erwärmen. Aufgrund der guten Wärmeleitung der Katalysatorplatte 2 wird diese Erwärmung gleichmäßig auch in den mit den Inertisierungselementen bedeckten Flächenteilen erfolgen, ungeachtet dessen, ob diese selbst an der katalytischen Reaktion teilnehmen oder nicht. Die entstehende Wärme wird den Inertisierungsstoff in den Behältern 4 der Inertisierungselemente 3 erwärmen, bis bei Erreichen der für den jeweils eingesetzten Inertisierungsstoff charakteristischen Reaktionstemperatur die Zersetzung des Inertisierungsstoffes und damit durch Freisetzung von CO₂ und/oder Wasserdampf die Inertisierung einsetzt. Die im Bereich der eine höhere Temperatur als die Umgebung aufweisenden Katalysatorplatte entstehende Konvektionsströmung reißt die entstehenden Inertisierungsgase mit und vermischt sie mit der umgebenden Atmosphäre.

Es sei an dieser Stelle hervorgehoben, daß, obwohl bei dem beschriebenen Ausführungsbeispiel die Inertisierungselemente 3 nur an einer Seite der Katalysatorplatte 2 angeordnet sind, eine entsprechende Anordnung von weiteren Inertisierungselementen an der anderen Seite der Katalysatorplatte vorgesehen werden kann. Dabei empfiehlt es sich, die Inertisierungselemente auf den beiden gegenüberliegenden Katalysatorplattenseiten gegeneinander versetzt anzuordnen, damit die gleichmäßige Wärmeverteilung und Reaktionsfähigkeit der Katalysatorplatte gewährleistet bleibt.

Zur Erzielung einer zeitlich gestaffelten Freisetzung inertisierender Gase können entweder innerhalb jedes einzelnen Inertisierungselements Inertisierungstoffe mit unterschiedlichen Reaktionstemperaturen vorgesehen werden, oder verschiedene Inertisierungselemente könnten Inertisierungsstoffe mit unterschiedlichen Reaktionstemperaturen beinhalten. Im ersteren Fall werden die verschiedenen Inertisierungsstoffe vorzugsweise parallel zur Katalysatorplatte so geschichtet, daß der Inertisierungsstoff mit der höchsten Reaktionstemperatur der Katalysatorfläche am nächsten liegt und der mit der niedrigsten Reaktionstemperatur am weitesten entfernt liegt. Dabei bewirken die sich bei der Zersetzung des der Katalysatoroberfläche direkt benachbarten Inertisierungsstoffs bildenden und nach außen dringenden Gase die Erwärmung der weiter außen liegenden Stoffe und bewirken deren Zersetzung, soweit diese noch nicht erfolgt ist. Die Reaktionstemperatur des in unmittelbarer Nähe zur Katalysatoranordnung liegenden Inertisierungsstoffes sollte bei 200 bis 450°C, vorzugsweise 300 bis 350°C liegen, damit die Wechselwirkung zwischen diesen beiden Arten von Schutzeinrichtungen optimal wird.

Da, wie oben erwähnt, Inertisierungsstoffe zur Verfügung stehen, deren Reaktionstemperatur im Bereich von 100°C liegt, könnte ihr Einsatz eine anfängliche Freisetzung von Inertisierungsgasen bewirken, noch bevor eine wesentliche Erwärmung der Katalysatorplatte 2 eingetreten ist. Wenn sich dann die Katalysatorplatte 2 erwärmt und einen Teil dieser Wärme an die Inertisierungselemente weitergibt, würden bei Erreichen jeweiliger Temperaturen, Inertisierungsstoffe mit höheren Reaktionstemperaturen ihre Wirkung entfalten. Die Wärmeabgabe von der Katalysatorplatte 2 an die Inertisierungselemente 3 hat den nützlichen Nebeneffekt der Begrenzung des Temperaturanstiegs der Katalysatorplatte. Damit wird verhindert, daß, zumindest solange noch nicht die volle Inertisierung durch die Inertisierungselemente eingetreten ist, die Katalysatorplatte nicht eine Temperatur erreicht, die ihrerseits eine Zündung auslösen könnte.

Wenn innerhalb eines durch die erfindungsgemäße Vorrichtung geschützten Raumes mit der Freisetzung von besonders viel Wasserstoff zu rechnen ist, wird bevorzugt zumindest für einen Teil der eingesetzten Inertisierungsstoffe ein solcher mit einer Reaktionstemperatur im Bereich von 100°C verwendet. Damit tritt gleich in der Anfangsphase des Unfalles die gewünschte Inertisierungswirkung ein, die die Gefahr einer Flammenpropagation und einer Detonation ausschaltet. Durch die dann einsetzende katalytische Umwandlung des Wasserstoffs wird der Überschuß des Wasserstoffs oberhalb der Deflagrationskonzentration rasch abgebaut.

Fig. 3 zeigt eine der Fig. 2 entsprechende Ansicht eines abgewandelten Ausführungsbeispiels, das sich von dem zuvor erläuterten dadurch unterscheidet, daß die Inertisierungselemente unter Zwischenlage eines Bodens 10 und von Abstandsscheiben 11 an der Katalysatorplatte 2 befestigt sind derart, daß ein Zwischenraum 12 zwischen dem Inertisierungselement und der Oberfläche der Katalysatorplatte entsteht. Über diesen Zwischenraum hat die umgebende Atmosphäre freien Zugang zur Katalysatoroberfläche, was durch die bei zunehmender Erwärmung der Katalysatorplatte einsetzende Konvektionsströmung noch gefördert wird. Die Bodenplatte 10 und die Abstandsscheiben 11 sind vorzugsweise aus gut wärmeleitendem Metall, um die erwünschte Wärmeübertragung von der Katalysatorplatte auf das Inertisierungselement zu gewährleisten. In der Bodenplatte 10 können Löcher vorgesehen sein, durch die die entstehenden Inertisierungsgase im Bereich des Bodens des Inertisierungselements 3 austreten können.

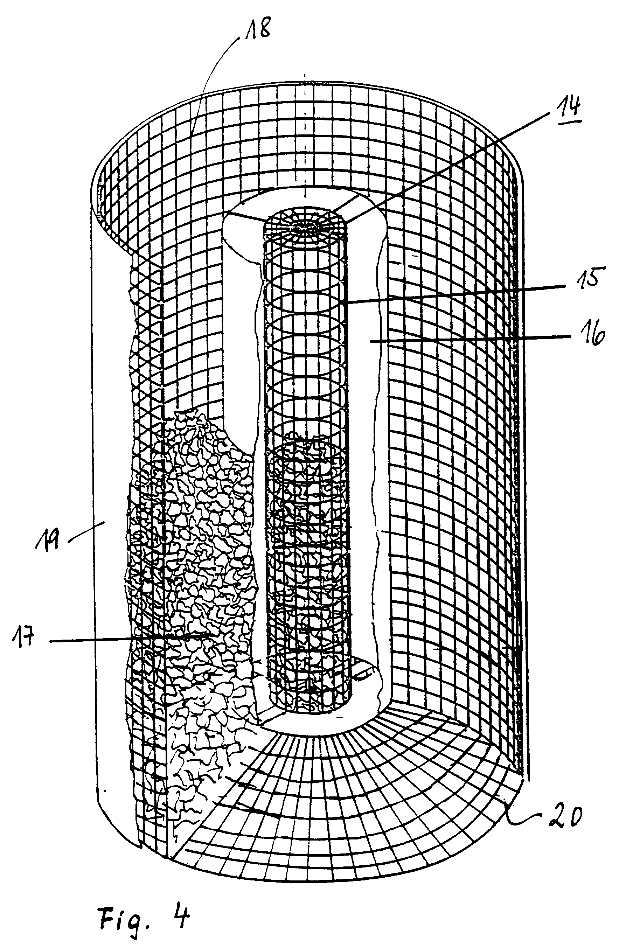

Fig. 4 zeigt in perspektivischer Darstellung ein anderes Ausführungsbeispiel der Erfindung, bei dem eine Katalysatoranordnung und Inertisierungselemente als konzentrische Zylinder angeordnet sind. Im Zentrum befindet sich ein erstes Inertisierungselement 14 mit einem den Inertisierungsstoff enthaltenden Hohlzylinder 15 aus gitterartigem Material. Das Inertisierungselement 14 ist konzentrisch von der Katalysatoranordnung 16 in Form eines Zylindermantel aus mit dem Katalysatormaterial beschichtetem rostfreien Stahlblech umgeben. Die Katalysatoranordnung 16 ist von einem zweiten Inertisierungselement 17 mit einem äußeren Zylindermantel 18 aus gitterartigem Material umgeben. Letzterer ist auf seiner Außenseite mit einer Filterschicht 19 aus dem oben erwähnten HEPA Filtermaterial abgedeckt. Wenn der Zylindermantel der Katalysatoranordnung 16 nur innenseitig mit dem Katalysatormaterial beschichtet ist, kann seine Außenfläche zugleich die innere Begrenzungsfläche des zweiten Inertisierungselements bilden, wie es in Fig. 4 dargestellt ist. Ist der Katalysatorzylinder dagegen, je nach gewünschter Katalysatorfläche, auch außenseitig beschichtet, dann würde das zweite Inertisierungselement zweckmäßig einen in Fig. 4 nicht gezeigten zusätzlichen inneren Zylindermantel aus gitterartigem Material aufweisen, der mit einem eine ausreichende Gasströmung erlaubenden Abstand zum Katalysatorzylindermantel angeordnet wäre. Ein Boden 20 ebenfalls aus gitterartigem Material schließt das zweite Inertisierungselement unten ab und dient als Auflage für den Inertisierungsstoff. Geeignete Verbindungsmittel zur mechanischen Verbindung der einzelnen Teile der Anordnung von Fig. 4 sind der Einfachheit halber in der Figur nicht dargestellt.

Die schachtartige Struktur der Anordnung von Fig. 4 verursacht durch Kaminwirkung eine verstärkte Konvektionsströmung mit der Folge einer raschen Verteilung der entstehenden inertisierenden Gase. Obwohl in Fig. 4 nicht dargestellt, könnten hier zwischen dem Inertisierungsmaterial und dem dieses jeweils einschließenden Gitter Filterschichten ähnlich den Filterschichten 8 der Fig. 2 und 3 vorgesehen werden.

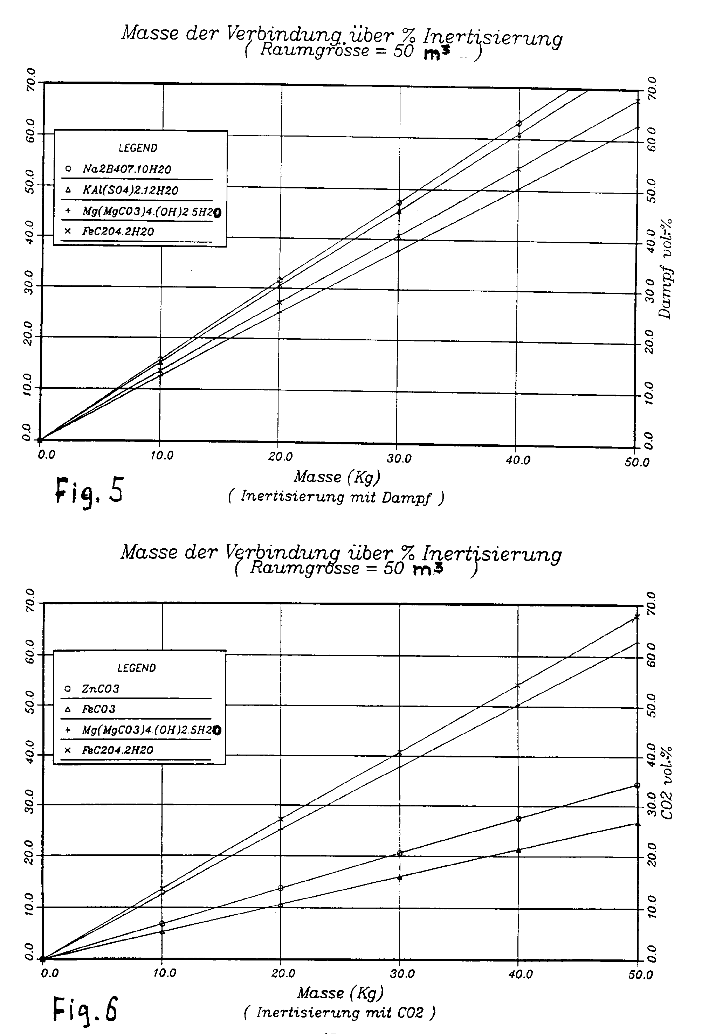

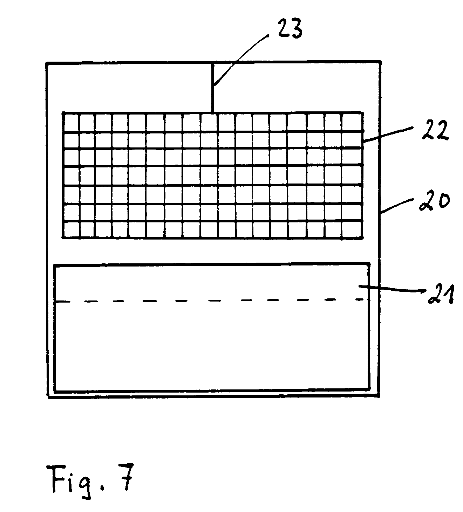

Fig. 5 ist ein Diagramm, das bezogen auf eine Raumgröße von 50 m³ für vier verschiedene Inertisierungsstoffe den rechnerisch ermittelten erzielbaren Dampfgehalt über der Masse des Inertisierungsstoffs zeigt. Fig. 6 ist ein entsprechendes Diagramm, das für vier verschiedene Inertisierungsstoffe den rechnerisch ermittelten erzielbaren CO₂ Gehalt über der Masse zeigt.

Es sei zunächst auf Fig. 5 Bezug genommen. Die hier beispielhaft berücksichtigten Inertisierungstoffe setzen Dampf bei unterschiedlichen Reaktionstemperaturen (Zersetzungstemperaturen) frei. So beträgt die Reaktionstemperatur von KAl (SO₄)₂·12H₂O wenig mehr als 100°C, während Na₂B₄O₇·10H₂O auf eine Reaktionstemperatur von 350°C gebracht werden muß. Die Kombination verschiedener Inertisierungsstoffe mit unterschiedlichen Reaktionstemperaturen innerhalb von verschiedenen Inertisierungselementen führt, wie schon oben erwähnt, zu einer dem Temperaturanstieg entsprechend zeitlich gestaffelten Dampffreisetzung. Wenn die niedrigste der verschiedenen Reaktionstemperaturen der verschiedenen Inertisierungsstoffe bei 100°C liegt, also bei einer Temperatur, die auch schon ohne die Aufheizung aufgrund der katalytischen Reaktion erreicht wird, dann entzieht der zugehörige Inertisierungsstoff der Katalysatorplatte keine Wärme. Die Katalysatorplatte gelangt daher rasch zu einer, die katalytische Reaktion wesentlich verstärkenden höheren Temperatur. Je mehr Wasserstoff pro Zeiteinheit katalytisch umgewandelt wird, desto stärker wird die Wasserstoffkonzentration herabgesetzt, desto mehr Inertisierung wird aber auch durch den aufgrund der katalytischen Reaktion entstehenden Dampf erreicht.

Für die Dampfinertisierung ist es gleichgültig, ob der Dampf als Ergebnis der katalytischen Wasserstoffumwandlung entsteht oder von dem Inertisierungsstoff erzeugt wird. Der Dampf braucht eine gewisse Zeit, um zu einer kühlen Wand zu gelangen, an der er kondensiert. Durch die ständige Dampfproduktion aus der katalytischen Reaktion sowie durch die Inertisierungselemente wird sich eine hohe Dampfkonzentration trotz ständiger Kondensation von Dampf an den kühlen Wänden einstellen. Die Kondensation trägt dazu bei, eine zu starke Druckerhöhung durch den freigesetzten Dampf zu vermeiden. Nach der Beendigung der katalytischen Reaktion, bedingt durch die Vernichtung des Wasserstoffs, wird möglicherweise eine globale Druckentlastung erreicht, durch die eine aktive Druckentlastung der Atmosphäre des Sicherheitsbehälters unter Umständen vermieden werden kann.

Aus Fig. 5 geht hervor, daß bereits 10 kg der beschriebenen Inertisierungsstoffe zu einem Volumenprozentanteil des Dampfes von 12-15% (bezogen auf eine Raumgröße von 50 m³) beitragen. Aus Fig. 6 ergeben sich für die Erzeugung von CO₂ ähnliche Verhältnisse. Es ist an dieser Stelle darauf hinzuweisen, daß die beispielhaft als Inertisierungsstoffe genannten chemischen Substanzen 40 bis 60% Anteile von Kristallwasser oder CO₂ besitzen. Werden Inertisierungsstoffe mit höheren Anteilen eingesetzt, dann können entsprechend geringere Massen vorgesehen werden.

Fig. 7 veranschaulicht eine Ausführungsform der Erfindung, bei der zur Freisetzung eines inertisierenden Gases oder Gasgemisches verschiedene Stoffe miteinander zur Reaktion gebracht werden. Die dargestellte Ausführungsform eignet sich für Fälle, bei denen ein fester Stoff und eine Flüssigkeit miteinander reagieren sollen. Im unteren Bereich eines Rahmens 20 ist eine Wanne 21 aus geeignetem Material angeordnet, in der sich beispielsweise Salzsäure befindet. Oberhalb der Wanne 21 ist ein Drahtkorb 22 aus rostfreiem Stahl aufgehängt. In dem Drahtkorb befindet sich (bei dem angenommenen Beispiel) Calciumbikarbonat. Die Aufhängung 23 des Drahtkorbs ist so ausgebildet, daß sie sich bei Erreichen einer vorbestimmten Temperatur löst, woraufhin der Drahtkorb in die Wanne 21 mit der Salzsäure fällt. Die Maschenweite des Drahtkorbes 22 ist so gewählt, daß das eingefüllte Calciumbikarbonat nicht herausfallen kann, daß aber nach dem Herunterfallen in die Wanne die Salzsäure ungehindert in den Drahtkorb eindringt, und es zu der gewünschten Reaktion kommt. Die Aufhängung enthält beispielsweise eine Lötstelle mit einem Lot, dessen Schmelztemperatur der gewünschten Temperatur gleicht, bei der die Freisetzung des inertisierenden Gasgemisches erfolgen soll.

Auch die vorgenannte Ausführungsform läßt sich, ohne daß dies dargestellt wäre, in vorteilhafter Weise mit einer Katalysatoranordnung kombinieren. Zu diesem Zweck wäre es lediglich erforderlich, eine gut wärmeleitende Verbindung zwischen einer in der Nähe angeordneten Katalysatoranordnung und der Aufhängung 23 zu schaffen.

Die voranstehend beschriebenen Ausführungsbeispiele der Erfindung stehen stellvertretend für eine große Vielfalt möglicher Realisierungsformen der Erfindung. Wesentlich ist, daß die erfindungsgemäß zur passiven Inertisierung eingesetzte(n) chemische Substanz(en) in einer den freien Gasaustausch mit der Atmosphäre des jeweils zu schützenden Raums gestattenden Weise in diesem Raum angeordnet ist (sind). Ein Gehäuse mit gasdurchlässigen Wänden kann die Substanz vor der Zersetzung bzw. Reaktion aber auch das nach der Zersetzung oder Reaktion übrigbleibende Reaktionsprodukt zusammenhalten. Wo ein erfindungsgemäßes Inertisierungselement in Verbindung mit einer Katalysatoranordnung eingesetzt wird, muß dies in einer Weise erfolgen, daß einerseits die katalytische Rekombination nicht beeinträchtigt wird, andererseits aber der gewünschte Wärmetransport zu dem Inertisierungselement stattfinden kann. Ferner muß gewährleistet sein, daß nach der Freisetzung des inertisierenden Gases durch das Inertisierungselement dessen zurückbleibendes Reaktionsprodukt (das deshalb möglichst nicht flüssig sein sollte) von der Katalysatoranordnung ferngehalten wird, um nicht deren Wirkung zu behindern.

## Patentansprüche

1. Vorrichtung zur Verhinderung der Entstehung eines zündfähigen Gemisches aus Wasserstoff und Sauerstoff in dem Sicherheitsbehälter eines Kernkraftwerks im Falle eines mit der Freisetzung von Wasserstoff unter gleichzeitiger Temperaturerhöhung verbundenen Störfalles, umfassend eine Einrichtung zur Abgabe eines die Atmosphäre in dem Sicherheitsbehälter inertisierenden Gases,
dadurch **gekennzeichnet,** daß die Einrichtung wenigstens ein in dem Sicherheitsbehälter angeordnetes Inertisierungselement (3; 14, 17) umfaßt, das wenigstens eine chemische Substanz enthält, welche bei Überschreitung einer bestimmten Reaktionstemperatur durch Zersetzung und/oder chemische Reaktion ein inertisierendes Gas oder Gasgemisch in den Sicherheitsbehälter abgibt.

2. Vorrichtung nach Anspruch 1, dadurch **gekennzeichnet,** daß das inertisierende Gas oder Gasgemisch CO₂ und/oder Wasserdampf umfaßt.

3. Vorrichtung nach Anspruch 1 oder 2, **gekennzeichnet** durch wenigstens eine in dem Sicherheitsbehälter angeordnete Katalysatoranordnung (2; 16) zur Oxidation des Wasserstoffs, wobei wenigstens ein Inertisierungselement (3; 14, 17) in Nachbarschaft zu der Katalysatoranordnung so angeordnet ist, daß es von der sich aufgrund der katalytischen Reaktion erwärmenden Katalysatoranordnung durch Wärmeleitung, Strahlungs- und/oder Konvektionswärme erwärmt wird.

4. Vorrichtung nach Anspruch 1, 2 oder 3, dadurch **gekennzeichnet,** daß mehrere Inertisierungselemente (3; 14, 17) jeweils unterschiedlicher Reaktionstemperatur vorgesehen sind.

5. Vorrichtung nach einem der Ansprüche 1 bis 4, dadurch **gekennzeichnet,** daß das Inertisierungselement (3; 14, 17) einen die chemische Substanz bzw. die chemischen Substanzen enthaltenden Behälter (4; 15, 18) mit gas- und dampfdurchlässigen Wänden aufweist.

6. Vorrichtung nach Anspruch 5, dadurch **gekennzeichnet,** daß der Behälter (4; 15, 18) aus einem Drahtgitter aus rostfreiem Draht besteht.

7. Vorrichtung nach Anspruch 5 oder 6, dadurch **gekennzeichnet,** daß sich an der Innenseite der Behälterwände eine Filterschicht (8) aus einem HEPA-Filtermaterial befindet.

8. Vorrichtung nach einem der Ansprüche 3 bis 7, dadurch **gekennzeichnet,** daß die Katalysatoranordnung eine Katalysatorplatte (2) umfaßt, mit der ein Inertisierungselement (3) oder mehrere untereinander beabstandete Inertisierungselemente gut wärmeleitend verbunden sind.

9. Vorrichtung nach Anspruch 8, dadurch **gekennzeichnet,** daß das bzw. die Inertisierungselemente (3) unter Zwischenlage von Abstandshaltern (11) in einem den freien Zutritt der umgebenden Atmosphäre zur Oberfläche der Katalysatorplatte gestattenden Abstand zu dieser Oberfläche und der Katalysatorplatte befestigt ist bzw. sind.

10. Vorrichtung nach einem der Ansprüche 8 und 9, dadurch **gekennzeichnet,** daß das Inertisierungselement eine Mehrzahl chemischer Substanzen unterschiedlicher Reaktionstemperatur in schichtweiser Anordnung enthält, wobei die Substanz mit der höchsten Reaktionstemperatur der Katalysatorplatte am nächsten liegt.

11. Vorrichtung nach einem der Ansprüche 8 bis 10, dadurch **gekennzeichnet,** daß die Reaktionstemperatur einer in unmittelbarer Nähe zur Katalysatorplatte liegenden oder diese kontaktierenden Substanz 200 - 450 °C, vorzugsweise 300 - 350 °C beträgt.

12. Vorrichtung nach einem der Ansprüche 8 bis 11, dadurch **gekennzeichnet,** daß als Inertisierungsstoff bzw. -stoffe ein solcher bzw. solche verwendet werden, der bzw. die nach der Zersetzung oder Reaktion kein flüssiges Reaktionsprodukt hinterlassen.

13. Vorrichtung nach einem der Ansprüche 1 bis 12, dadurch **gekennzeichnet,** daß als Inertisierungsstoff bzw. -stoffe ein solcher bzw. solche verwendet werden, dessen bzw. deren nach der Zersetzung oder Reaktion verbleibendes Reaktionsprodukt durch Oxidation dem Gasgemisch der umgebenden Atmosphäre Sauerstoff entzieht.

14. Vorrichtung nach einem der Ansprüche 2 bis 13, dadurch **gekennzeichnet,** daß als Inertisierungsstoff bzw. -stoffe ein solcher bzw. solche verwendet werden, dessen bzw. deren Anteil von CO₂ und/oder Kristallwasser am Molekulargewicht wenigstens 45%, vorzugsweise mehr beträgt.

## Claims

1. Device for preventing the formation of a flammable mixture of hydrogen and oxygen in the reactor containment of a nuclear power plant in the event of an accident involving the release of hydrogen with a simultaneous increase in temperature, said device comprising means for the liberation of a gas for inerting the atmosphere in the reactor containment, characterized in that said means includes at least one inerting element (3; 14, 17) situated in the reactor containment and containing at least one chemical substance which delivers an inerting gas or gas mixture into the reactor containment through disintegration and/or chemical reaction when a certain temperature of reaction is exceeded.

2. Device according to Claim 1, characterized in that the inerting gas comprises of CO₂ and/or steam.

3. Device according to Claim 1 or 2, characterized by at least one catalyst arrangement (2; 16) situated in the reactor containment for oxidation of the hydrogen, with at least one inerting element (3; 14, 17) disposed in the vicinity of the catalyst arrangement in such a manner that it will be heated up through thermal conduction, radiation and/or convection heat as caused by the catalyst arrangement's heating up because of catalytic reaction.

4. Device according to Claim 1, 2 or 3, characterized in that plural inerting elements (3; 14, 17) are provided, each having a different temperature of reaction.

5. Device according to one of the Claims 1 through 4, characterized in that the inerting element (3; 14, 17) has a receptacle (4; 15, 18) containing the chemical substance or chemical substances, the walls of the receptacle being permeable by gas and steam.

6. Device according to Claim 5, characterized in that the receptacle (4; 15, 18) is made from a wire grid made of stainless steel wire.

7. Device according to Claim 5 or 6, characterized in that a filter layer (8) made of a HEPA filter material is located on the inside of the receptacle walls.

8. Device according to one of the Claims 3 through 7, characterized in that the catalyst arrangement comprises a catalyst plate (2), to which one inerting element (3) or several inerting elements spaced apart from one another is/are connected so as to conduct heat well.

9. Device according to Claim 8, characterized in that the inerting element or inerting elements (3) with the use of spacers (11) is/are attached to the catalyst plate at such a distance to the surface of the catalyst plate as to permit the free access of the surrounding atmosphere to the surface of the catalyst plate.

10. Device according to one of the Claims 8 and 9, characterized in that the inerting element contains a plurality of chemical substances having different temperatures of reaction and arranged in layers, with the substance having the highest temperature of reaction placed nearest to the catalyst plate.

11. Device according to one of the Claims 8 through 10, characterized in that the temperature of reaction of a substance disposed in the immediate vicinity of the catalyst plate or in contact with it is in the range of 200° to 450° C, and preferably 300° to 350° C.

12. Device according to one of the Claims 8 through 11, characterized in that such an inerting material or inerting materials are employed that will leave no liquid product of reaction remaining after the disintegration or reaction takes place.

13. Device according to one of the Claims 1 through 12, characterized in that such an inerting material or inerting materials are used the remaining reaction product of which following disintegration or the reaction will remove oxygen from the gas mixture of the surrounding atmosphere through oxidation.

14. Device according to one of the Claims 2 through 13, characterized in that such an inerting material or inerting materials are used the proportion of CO₂ and/or water of crystallization of which is at least 45 % of its/their molecular weight and preferably more.

## Revendications

1. Dispositif destiné à empêcher la formation d'un mélange explosif d'hydrogène et d'oxygène dans l'enceinte de sécurité d'une centrale nucléaire, dans le cas d'un incident lié à la libération d'hydrogène avec une augmentation simultanée de température, comportant un dispositif destiné à dégager un gaz inertisant l'atmosphère de l'enceinte de sécurité,
caractérisé en ce que le dispositif comporte au moins un élément inertisant (3 ; 14, 17) disposé dans l'enceinte de sécurité qui contient au moins une substance chimique, qui en cas de dépassement d'une température de réaction déterminée, dégage par décomposition et/ou réaction chimique un gaz ou un mélange gazeux inertisant dans l'enceinte de sécurité.

2. Dispositif selon la revendication 1, caractérisé en ce que le gaz ou le mélange gazeux inertisant contient du CO₂ et/ou de la vapeur d'eau.

3. Dispositif selon l'une des revendications 1 ou 2, caractérisé par au moins un dispositif catalyseur (2 ; 16) disposé dans l'enceinte de sécurité et destiné à l'oxydation de l'hydrogène, un élément inertisant (3 ; 14, 17) au moins étant disposé au voisinage du dispositif catalyseur de telle sorte qu'en raison de la réaction catalytique réchauffant le dispositif catalyseur, il soit réchauffé par transmission thermique, chaleur de radiation et/ou de convection.

4. Dispositif selon l'une des revendications 1, 2 ou 3, caractérisé en ce que ce qu'il est prévu plusieurs éléments inertisants (3 ; 14, 17) ayant respectivement des températures de réaction différentes.

5. Dispositif selon l'une quelconque des revendications 1 à 4, caractérisé en ce que l'élément inertisant (3 ; 14, 17) comporte un conteneur (4 ; 15, 18) contenant la substance chimique ou les substances chimiques, dont les parois sont perméables aux gaz et à la vapeur.

6. Dispositif selon la revendication 5, caractérisé en ce que le conteneur (4 ; 15, 18) est constitué d'un grillage métallique en fil d'acier inoxydable.

7. Dispositif selon l'une quelconque des revendications 5 ou 6, caractérisé en ce que la face intérieure des parois du conteneur est pourvue d'une couche filtrante (8) constituée d'un matériau filtrant HEPA.

8. Dispositif selon l'une quelconque des revendications 3 à 7, caractérisé en ce que le dispositif catalyseur comporte une plaque catalytique (2), grâce à laquelle un élément inertisant (3), ou plusieurs éléments inertisants écartés les uns des autres, est ou sont relié(s) avec une bonne conduction thermique.

9. Dispositif selon la revendication 8, caractérisé en ce que, par rapport à la surface de la plaque catalytique, le ou les éléments inertisants (3) est ou sont fixé(s) par l'intermédiaire de moyens de maintien à distance (11) à un écartement permettant le libre accès de l'atmosphère environnante à cette surface et à la plaque catalytique.

10. Dispositif selon l'une des revendications 8 ou 9, caractérisé en ce que l'élément inertisant contient plusieurs substances chimiques ayant différentes températures de réaction disposées par couches, la substance ayant la température de réaction la plus élevée étant située au plus près de la plaque catalytique.

11. Dispositif selon l'une quelconque des revendications 8 à 10, caractérisé en ce que la température de réaction d'une substance située à proximité immédiate de la plaque catalytique, ou d'une substance qui est en contact avec celle-ci, est de 200 à 450° C, de préférence de 300 à 350° C.

12. Dispositif selon l'une quelconque des revendications 8 à 11, caractérisé en ce qu'il est utilisé en tant que matière ou matières inertisante(s), une ou des matières dont la décomposition ou la réaction ne forme pas de produit de réaction liquide.

13. Dispositif selon l'une quelconque des revendications 1 à 12, caractérisé en ce qu'il est utilisé en tant que matière ou matières inertisante(s), une ou des matières dont le produit de réaction subsistant après la décomposition ou la réaction absorbe de l'oxygène dans le mélange gazeux de l'atmosphère environnante par oxydation.

14. Dispositif selon l'une quelconque des revendications 2 à 13, caractérisé en ce qu'il est utilisé en que tant matière ou matières inertisante(s), une ou des matières dont la proportion en CO₂ et/ou en eau de cristallisation dans le poids moléculaire est au moins de 45 %, de préférence supérieure.
